# FASCICULE DE BREVET EUROPEEN

(11) **EP 3 695 571 B1**
(45) Date de publication et mention de la délivrance du brevet: **18.08.2021**
(21) Numéro de dépôt: 18769143.1
(22) Date de dépôt: 11.09.2018
(51) Int. Cl.: H04L 12/707, H04L 29/06

(54) **DISPOSITIF ET PROCÉDÉ DE TRANSMISSION DE DONNÉES**
SYSTEM UND VERFAHREN ZUR DATENÜBERTRAGUNG
DEVICE AND METHOD FOR DATA TRANSMISSION

(30) Priorité: 10.10.2017 FR 1759452
(43) Date de publication de la demande: 19.08.2020
(73) Titulaire: Commissariat à l'Énergie Atomique et aux Énergies Alternatives, 75015 Paris (FR)
(72) Inventeur: LAURENT, Frédéric, 78350 Jouy en Josas (FR); OLIVEREAU, Alexis, 91400 Orsay (FR)
(74) Mandataire: Marks & Clerk France
(86) Numéro de dépôt international: PCT/EP2018/074417
(87) Numéro de publication internationale: WO 2019/072470

(56) Documents cités:
- WO-A2-00/27086
- CN-A- 106 101 107

## Description

### Domaine de l'invention

L'invention concerne le domaine des communications et plus particulièrement celui des protocoles de communication.

### Etat de la Technique

Prévenir les attaques sur des données privées est devenue une priorité lors de communications, et il est tout autant recherché une assurance d'un accès anonymisé à l'Internet qu'une sécurité de la confidentialité des données échangées.

Aussi, il est souhaitable de masquer l'identité des opérateurs des équipements qui sont utilisés pour accéder à des services (le terme de service étant compris pour la présente description dans un sens large pouvant désigner un service applicatif ou un équipement) ou plus généralement utilisés pour mener toute opération dont la connaissance peut servir à identifier l'opérateur. Afin de masquer l'identité des sources, les éléments qui identifient l'équipement, même indirectement quand bien même la communication de ceux-ci serait chiffrée, doivent être rendus inexploitables à un observateur tiers. Parmi ces éléments d'identification potentielle, les métadonnées réseau et particulièrement les adresses IP sources et destination d'une communication sont celles dont l'exploitation est la plus susceptible de compromettre l'anonymat (ou la « privacy » selon l'anglicisme consacré) de l'opérateur. En effet, les adresses IP sources et destination identifient de manière unique la source et la destination d'une communication, permettent leur localisation physique, sont relativement permanentes, et restent observables par un tiers sur l'intégralité du chemin de communication.

Il existe plusieurs solutions offrant une garantie plus ou moins élevée d'accès anonymisé à Internet. Les solutions les plus connues sont les services à base de proxy classique qui affichent l'adresse IP du proxy et non celle du périphérique utilisé, ou le réseau Tor (« *The Onion Router* ») ou encore le réseau I2P (« *Invisible Internet Project* ») fonctionnant sur le mécanisme de routage connu « *garlic routing* » dérivé de Tor.

Ces solutions reposent sur la mise en place d'un réseau privé virtuel ou VPN « Virtual Private Network », entre l'utilisateur et le service via un proxy classique ou via plusieurs serveurs proxy (pour Tor ou I2P) qui sont mis en série et sont chargés d'encapsuler les communications entre l'utilisateur et le service auquel il souhaite accéder ou avec lequel il souhaite communiquer. Pour chaque communication, ces solutions présentent toutes un seul point d'entrée et de sortie qui sont autant de vulnérabilités potentielles.

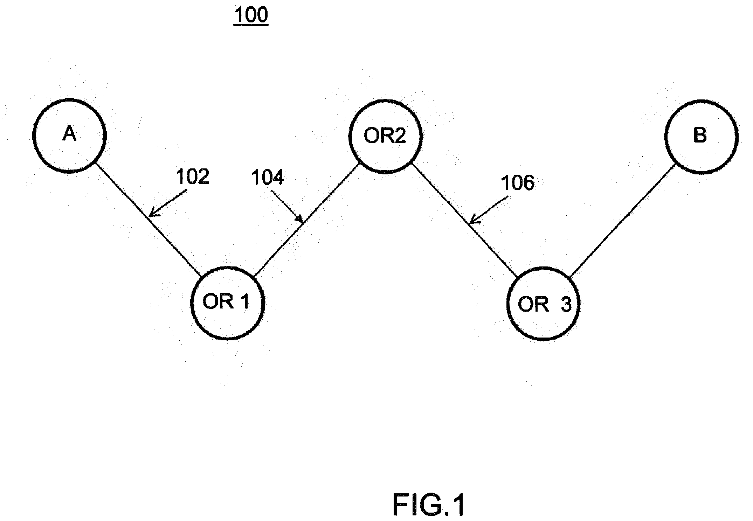

Le réseau Tor présenté dans l'article de R. Dingledine, N. Mathewson and P. Syverson, « Tor:The Second-Generation Onion Router », 2004, s'appuie sur la technologie dite du routage en oignon décrite par exemple dans l'article « Onion Routing » de D. Goldschlag, M. Reed and P. Syverson, Hiding Routing Information, 1996. La figure 1 présente sur un exemple simplifié, l'établissement du routage dans un réseau Tor (100) où une source Alice (A) souhaite établir une communication avec une destination Bob (B) par le réseau Tor au travers de 3 routeurs ou proxy intermédiaires OR1, OR2 et OR3. Afin de communiquer de manière sécurisée avec Bob via l'infrastructure Tor, Alice contacte successivement les routeurs OR1, OR2 et OR3. OR1 est contacté directement par Alice, alors qu'OR2 est contacté via OR1 et OR3 est contacté via OR1 et OR2. Ce contact permet la création d'un circuit ou chemin composé de trois segments A⇔OR1 (102), OR1⇔OR2 (104), OR2⇔OR3 (106). Les paquets de données de liaison descendante de Alice vers Bob, ou paquets « downlink », sont d'abord transmis sur le premier segment (102) entre A et OR1 et reçus par OR1. Ils sont ensuite réémis par OR1 sur le second segment (104) entre OR1 et OR2. Les paquets downlink reçus par OR2 depuis le second segment (104) sont ensuite réémis par OR2 sur le troisième segment (106) entre OR2 et OR3. Les paquets downlink reçus par OR3 depuis le troisième segment (106) entre OR2 et OR3 sont enfin réémis par OR3 vers Bob. Les opérations de chiffrement associées permettent de s'assurer que seul le dernier routeur avant la destination (ici OR3) peut observer les paquets de données de liaison descendante de Alice vers Bob.

Dans le sens d'une liaison remontante ou « uplink » de Bob vers Alice, des opérations de routage réciproques sont employées. De manière similaire, les opérations de chiffrement associées permettent de s'assurer que seul le dernier routeur avant la destination (dans ce cas, OR1) peut observer les paquets de données de liaison remontante d'Alice vers Bob.

Bien que le principe selon l'approche Tor permette de limiter les risques d'attaques (au dernier routeur avant la destination), ces services d'anonymisation ne sont pas de type protection de la vie privée dès la conception ou « *privacy-by-design »* selon l'anglicisme consacré, et une compromission des proxies, qu'elle soit volontaire ou suite à une attaque, reste possible. En effet, une compromission, soit directe des proxies d'un système VPN classique ou via une procédure simple de corrélation des proxies entrant et sortant dans le cas de Tor, permet à un intercepteur de retrouver a minima l'utilisateur. Ces services d'anonymisation reposent donc essentiellement sur la confiance accordée par les utilisateurs aux proxys. Or il est de notoriété que certains proxies, même au sein de Tor, sont compromis.

Par ailleurs, il convient de noter pour ce qui concerne la protection de la confidentialité des données, qu'un tel service est indépendant du service de protection des données privées. Une communication peut bénéficier d'un service de confidentialité (avec des données transmises chiffrées) qui soit performant alors même que ses métadonnées (les adresses de l'émetteur et du récepteur) laissent la possibilité de connaître l'existence d'une transaction entre les acteurs émetteur/récepteur. Il existe un nombre très important de solutions de messagerie sécurisée plus ou moins évoluées reposant sur un cryptage de bout en bout (« *end-to-end cryptography* » selon l'anglicisme consacré). Au niveau de la couche réseau du modèle OSI (« Open System Interconnection »), le protocole IPsec ESP (Encapsulating Security Payload, RFC 4303) représente la technologie de chiffrement la plus employée afin de garantir un service de confidentialité. Lorsqu'il est utilisé dans un mode tunnel qui est l'approche classique des réseaux privés virtuels, le protocole ESP assure la confidentialité non seulement des données transportées par la couche réseau, mais également celle de l'en-tête réseau lui-même, car c'est l'intégralité du paquet IP transporté par le VPN qui se trouve chiffré et encapsulé dans un nouveau paquet à destination de la passerelle VPN.

Cette solution basée sur un VPN permettant d'assurer la confidentialité des données n'est cependant pas satisfaisante pour garantir l'anonymat. En effet, un service de VPN ne sécurise les métadonnées qu'entre un utilisateur et la passerelle VPN, et le destinataire du paquet encapsulé et les nœuds alentours voient l'intégralité du paquet original. De plus, la passerelle VPN représente également un point unique de défaillance (ou « *single point of failure* » SPOF selon l'anglicisme consacré) dans la mesure où sa possible compromission permet la connaissance de toutes les données et métadonnées supposément protégées.

Un exemple de communication sécurité, utilisant la fragmentation d'adresse IP, est décrit dans le document CN106101107A.

La demande de brevet WO 2015/177789 A1 propose une méthode pour établir dans un réseau de communication, une interconnexion privée entre une source et une destination en utilisant un secret partagé afin de sécuriser la transmission de données de l'émetteur vers le récepteur. Chaque paquet de données à émettre est cryptographiquement dissocié en deux ou plus fragments de données, lesquels fragments sont ensuite envoyés de l'émetteur vers le récepteur sur des chemins ou circuits réseau intégralement ou partiellement indépendants. Si cette solution présente des similarités conceptuelles avec la présente invention, elle vise une application différente et n'apporte donc aucune garantie en termes de privacy. En effet :
- elle ne vise qu'à offrir un service de confidentialité des données, et n'intègre aucune fonctionnalité de privacy. Aussi a priori un tiers placé sur le trajet emprunté par les paquets est en mesure de savoir qu'il y a une communication entre l'utilisateur et le service. En particulier, il n'est nulle part fait mention d'un mécanisme permettant de masquer l'adresse de l'émetteur ou celle du récepteur lors de l'envoi des données chiffrées sur les chemins intégralement ou partiellement indépendants ;
- l'application de cette solution n'est envisagée que dans un mode collaboratif entre l'utilisateur et le service défini et n'est pas applicable à des communications génériques entre un utilisateur et un service quelconque ;
- de plus, le texte n'apporte aucun élément technique permettant de garantir qu'un croisement de circuits qui sont créés est impossible et qu'une compromission de quelques « *Points of Présence* » ne permettrait pas de casser la confidentialité des données.

Par ailleurs, Il faut noter que les solutions mentionnées ci-dessus s'appuient sur des technologies de cryptographie qui utilisent des clés de cryptage toujours plus longues, et qu'il faudra toujours plus de puissance de calcul pour casser ces clés via des attaques dites par force brute (« *brute-force attacks* » selon l'anglicisme consacré). Outre une menace moyen-terme théorique que représente l'ordinateur quantique pour briser ces clés de manière instantanée, l'actualité récente a révélé la capacité dont disposent des tiers pour casser certaines clés ou encore récupérer directement ces clés lors de leur génération (telles les opérations révélées du GCHQ et de la NSA pour récupérer les clés de cryptage des cartes SIM entre 2010 et 2011).

En outre, dans le cadre de services visant à assurer un accès anonymisé à l'Internet, les multiples niveaux de cryptage induisent un service relativement lent. A cause des multiples calculs nécessaires au cryptage/décryptage et des différents proxies mis en série, l'utilisation de Tor ou I2P dégrade fortement l'expérience utilisateur. Par exemple le transfert de gros fichiers ou l'utilisation de protocoles P2P (comme « torrent ») ne sont pas autorisés car ils mettraient en péril le modèle « économique » de ces systèmes.

Ainsi, il ressort de l'art antérieur que l'anonymisation et la sécurité sont deux fonctions qui sont généralement mises en œuvre de manière exclusive lors de communications entre un émetteur et un récepteur.

Il existe alors le besoin d'une solution globale qui combine les deux fonctions d'un accès anonymisé à un réseau de communication et de la sécurité de la confidentialité des données échangées. La présente invention répond à ce besoin.

### Résumé de l'invention

Un objet de la présente invention est de proposer un dispositif et un procédé d'anonymisation renforcé offrant également des propriétés accrues de sécurité des données.

La présente invention permet la sécurisation et le renforcement de l'anonymat de données échangées bidirectionnellement entre un client et un serveur dans un réseau de communication. Elle propose un protocole d'échange de données entre client et serveur qui s'appuie sur une architecture de serveurs tiers ainsi que sur un système de communication bidirectionnel entre le client et le serveur au travers de ces serveurs tiers.

Le procédé de l'invention se base sur le constat qu'un échange d'information est caractérisé par un triplet (utilisateur, service, contenu) ou respectivement (émetteur, récepteur, données) et que la connaissance ne serait-ce que des deux premiers éléments de ce triplet peut constituer une information valorisable par un tiers. Aussi, pour garantir l'anonymat et la sécurité des données, le procédé de l'invention permet que l'ensemble du triplet - identité de l'émetteur/utilisateur, identité du récepteur/service, données/contenu - soit protégé. Le principe général de l'invention consiste en une segmentation des informations dès la sortie du terminal émetteur où l'utilisateur dispose d'interfaces multiples lui permettant d'accéder à un réseau tel Internet (configuration connue sous le terme anglais « *multihoming* »)*.* Tout en renforçant la sécurité de chaque élément individuellement, la présente invention vise à isoler au maximum chaque élément du triplet et garantir qu'un tiers ne puisse avoir connaissance de plus d'un élément de ce triplet à la fois. Ainsi, cela rend l'intérêt d'une interception quasiment nul.

L'invention trouvera une application avantageuse pour les équipements qui en plus d'une connexion réseau principale, offrent des connexions réseau additionnelles de type 4G et/ou WIFI. A moyen terme, l'avènement de la 5G et le déploiement des réseaux de type Internet des Objets (loT) qui offriront des interfaces pervasives et/ou additionnelles, permettront d'autres implémentations de l'invention.

Par ailleurs, les systèmes existants soit d'anonymisation (privacy) soit de sécurisation (confidentialité) des communications sont deux applications immédiates.

Avantageusement, l'invention peut être opérée dans un système d'anonymisation grand public tel que Tor ou I2P qui a des performances théoriques (latence, débits...) plus en phase avec les usages modernes d'Internet. De plus, ces systèmes ne sont pas à ce jour utilisés dans le milieu professionnel. Or, des activités d'intelligence économique peuvent être aisément menées en surveillant l'activité Internet d'un groupe (par exemple des sondes sur des câbles sous-marins). Un système d'anonymisation qui associe des fonctions de sécurité, tel que celui de l'invention qui est « *privacy-by-design* », peut être intégré dans l'offre des opérateurs.

Enfin, la nature distribuée du système qui repose sur trois éléments complémentaires permet d'envisager une mise en œuvre par les fournisseurs d'accès à l'Internet, et permettre alors de répondre à des sollicitations judiciaires par croisement de logs. En permettant également un renforcement du niveau de sécurité en mode collaboratif, le dispositif de l'invention peut offrir une alternative à la cryptographie pure (qui présente les risques de clés interceptées), ou encore permettre un déploiement facile des réseaux mobiles professionnels (PMR) en utilisant les bandes de fréquences actuelles des opérateurs 4G.

Ainsi, la présente invention vise à répondre aux insuffisances des solutions connues de privacy qui requièrent de leurs utilisateurs de faire une confiance aveugle au service d'anonymisation utilisé. Avantageusement, par sa mise en œuvre, le procédé proposé permet à un utilisateur de conserver un contrôle total sur les informations qui sont routées par les différents tiers de confiance et il supprime les nombreux points uniques de défaillance existants dans les solutions actuelles. L'invention lève l'obligation pour l'utilisateur de devoir faire confiance aux différents tiers pour garantir son anonymat.

Avantageusement, le dispositif de l'invention lorsqu'il est mis en œuvre en mode non-coopératif sur un seul équipement de type client, introduit des propriétés de sécurité sur une grande partie de l'ensemble du système de protection de la vie privée dès la conception.

Dans une implémentation alternative en mode coopératif sur des équipements de type client et serveur, l'invention permet un fonctionnement en collaboration avec un système de sécurité (de type secret-partagé auquel peut être ajouté de la cryptographie) introduisant alors dans un système de communication sécurisé, des propriétés de protection de la vie privée dès la conception.

L'invention proposée s'attache d'une part à isoler chaque élément du triplet (émetteur, récepteur, données) de manière à ce qu'un tiers ne puisse le reconsolider. D'autre part, elle utilise un mécanisme de secret partagé pour garantir que, même en cas de compromission d'une entité du système, un tiers ne puisse accéder à plus d'un des éléments du triplet. De plus, outre le fait que l'invention offre cette garantie de bout-en-bout en mode collaboratif, elle apporte également ces propriétés au plus près du service en mode non-collaboratif (à l'exception du point d'entrée retour).

Des avantages additionnels de l'utilisation du mécanisme de secret partagé sont aussi :
- d'ajouter un niveau de sécurité additionnel qui peut compléter le cryptage de bout en bout classique au niveau de la couche applicative. De surcroit, ce mécanisme garanti, à la différence du cryptage basé sur des clés de chiffrement, que l'anonymat ne pourra pas être compromis par des données envoyées par les couches applications de l'utilisateur qui aurait été décryptées (typiquement : une requête https avec du contenu récupéré par des cookies...) ;
- de nécessiter des calculs moins complexes que les quatre niveaux de cryptage minimum de Tor et de ses dérivés et donc de diminuer la latence par rapport aux solutions communes de *privacy* ;
- de diminuer les risques légaux associés à l'hébergement de nœuds de sortie (hors nœud retour) car, dans certaines variantes, ceux-ci ne voient effectivement pas l'intégralité du trafic.

Pour obtenir les résultats recherchés, un procédé et un dispositif pour mettre en œuvre le procédé sont proposés. En particulier, il est proposé un procédé d'anonymisation pour communiquer des données dans un réseau de communication IP, d'un émetteur ayant une pluralité d'interfaces réseau à un récepteur disposant d'au moins une adresse IP, le procédé comprenant les étapes de :
- transmettre par la pluralité d'interfaces réseau, des fragments de l'adresse IP du récepteur à une pluralité de serveurs dits serveurs de second niveau, selon un premier mécanisme de secret partagé ;
- transmettre par chaque serveur de second niveau le fragment d'adresse IP reçu à un unique serveur dit serveur maître, le serveur maître étant apte à reconstituer l'adresse IP du récepteur ;
- transmettre par la pluralité d'interfaces réseau, des fragments de données d'un paquet de données, à une pluralité de serveurs dits serveurs de premier niveau, selon un second mécanisme de secret partagé ;
- transmettre par chaque serveur de premier niveau le fragment de données reçu à un serveur de second niveau parmi la pluralité des serveurs de second niveau;
- transmettre par chaque serveur de second niveau, le fragment de données reçu au serveur maître, le serveur maître étant apte à reconstituer le paquet de données à partir de tous les fragments de données reçus; et
- transmettre depuis le serveur maître le paquet de données au récepteur.

Selon des modes de réalisation :
- l'étape de transmettre par la pluralité d'interfaces réseau, des fragments de données à la pluralité de serveurs de premier niveau, consiste à :
   - transformer le paquet de données à transmettre en autant de fragments de données que d'interfaces réseaux, ladite transformation du paquet se faisant selon le second mécanisme de secret partagé ; et
   - transmettre chaque fragment de données à un serveur de premier niveau via une interface réseau différente, chaque serveur de premier niveau étant assigné à une interface réseau ;
- le procédé comprend avant l'étape de transformation d'un paquet de données, une étape permettant à l'émetteur de sélectionner et d'authentifier autant de serveurs de premier niveau que d'interfaces réseaux parmi la pluralité de serveurs de premier niveau, et d'établir un circuit de communication unique entre chaque interface réseau et un serveur de premier niveau sélectionné ;
- le procédé comprend une étape permettant à l'émetteur de sélectionner au moins autant de serveurs de second niveau que de serveurs de premier niveau sélectionnés, et d'assigner un serveur de second niveau sélectionné à chaque serveur de premier niveau sélectionné, et une étape permettant d'informer chaque serveur de premier niveau, du serveur de second niveau qui lui est assigné ;
- l'étape de transmettre par chaque serveur de premier niveau le fragment de données reçu à un serveur de second niveau consiste à transmettre un fragment de données depuis un serveur de premier niveau à un serveur de second niveau qui lui est assigné, ledit serveur de second niveau ayant reçu de l'émetteur un fragment de l'adresse IP du récepteur selon le premier mécanisme de secret partagé ;
- l'étape de transmettre à une pluralité de serveurs de second niveau, des fragments de l'adresse IP du récepteur, comprend une étape permettant à l'émetteur d'établir un tunnel de communication entre chaque interface réseau et un serveur de second niveau ;
- le procédé comprend une étape permettant une auto-découverte des serveurs de second niveau et permettant d'établir des tunnels de communication entre les serveurs de second niveau et le serveur maître selon le premier mécanisme de secret partagé ;
- le procédé comprend une étape permettant de sélectionner un serveur maître parmi les serveurs de second niveau ;
- l'étape de transmettre par chaque serveur de second niveau le fragment d'adresse IP reçu à un unique serveur, consiste à transmettre lesdits fragments à un unique serveur dit serveur retour, ledit serveur retour étant apte à reconstituer l'adresse IP du récepteur et à synchroniser les serveurs de second niveau lors d'échanges TCP avec le récepteur.
- le procédé comprend des étapes consistant à :
   - envoyer de manière anonyme un paquet de données du récepteur au serveur retour ;
   - transmettre du serveur retour aux serveurs de second niveau sélectionnés, des fragments de données générés via un troisième mécanisme de secret partagé ;
   - transmettre par chaque serveur de second niveau, le fragment de données reçu, au serveur de premier niveau qui lui est assigné;
   - transmettre par chaque serveur de premier niveau, le fragment de données reçu, à l'émetteur ; et
   - reconstituer par l'émetteur, le paquet de données à partir de tous les fragments de données reçus ;
- le deuxième et le troisième mécanisme de secret partagé sont les mêmes.

L'invention peut opérer sous la forme d'un produit programme d'ordinateur qui comprend des instructions de code non transitoires permettant d'effectuer les étapes du procédé revendiqué selon les différents modes de réalisation quand le programme est exécuté sur un ordinateur. Le terme ordinateur s'entend comme étant non limitatif et peut couvrir tout dispositif tel une « set top box », un smartphone, un routeur fixe ou itinérant par exemple, permettant l'exécution d'instructions de code.

Dans un mode de réalisation, le procédé peut être implémenté sur une carte hardware ayant deux interfaces, au sein d'une « box » permettant les communications pour un foyer ou un bureau.

L'invention a aussi pour objet un dispositif d'anonymisation pour communiquer des données dans un réseau de communication IP, d'un émetteur ayant une pluralité d'interfaces réseau à un récepteur disposant d'au moins une adresse IP, le dispositif comprenant des moyens pour mettre en œuvre les étapes du procédé revendiqué.

### Description des figures

Différents aspects et avantages de l'invention vont apparaitre en appui de la description d'un mode préféré d'implémentation de l'invention mais non limitatif, avec référence aux figures ci-dessous :
La figure 1 illustre de manière simplifiée l'établissement de circuits et le routage bidirectionnel dans le réseau Tor ;
La figure 2 illustre un premier mode de réalisation d'une architecture de serveurs permettant de mettre en œuvre l'invention;
La figure 3 est un diagramme de flux pour illustrer l'établissement d'une connexion d'anonymisation selon un mode de réalisation de l'invention;
La figure 4 est un diagramme de flux d'un mode de réalisation de l'invention pour illustrer les échanges lors d'un flux montant ;
La figure 5 est un diagramme de flux d'un mode de réalisation de l'invention pour illustrer les échanges lors d'un flux descendant ;
La figure 6 illustre une architecture de serveurs permettant de mettre en œuvre l'invention dans un mode coopératif;
La figure 7 est un diagramme de flux pour illustrer l'établissement d'une connexion d'anonymisation selon une première variante du mode coopératif ;
La figure 8 est un diagramme de flux pour illustrer l'établissement d'une connexion d'anonymisation selon une autre variante du mode coopératif.

### Description détaillée de l'invention

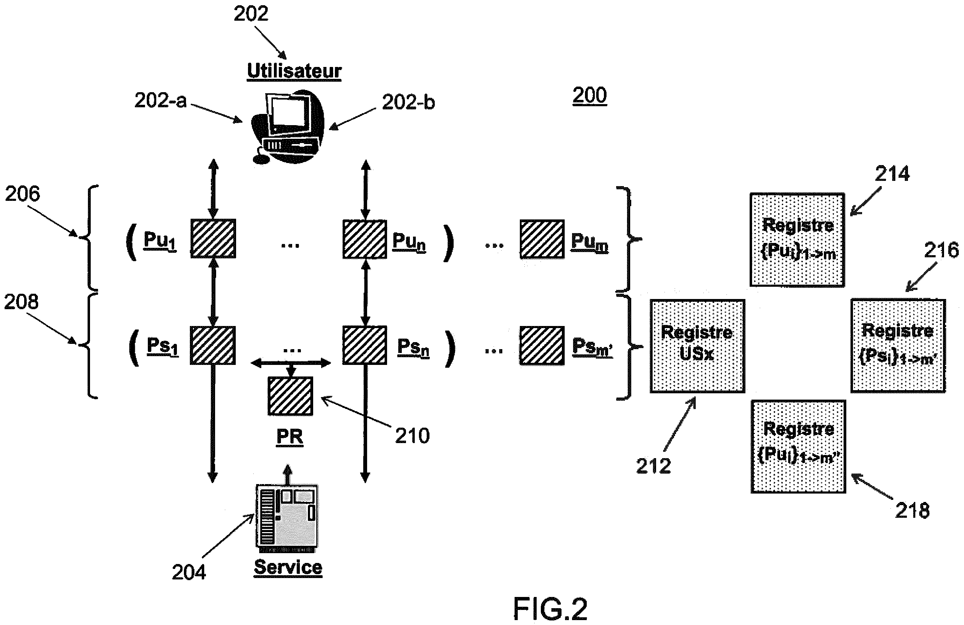

Le principe général de l'invention s'appuie sur une architecture de type proxy distribué (200) illustrée de manière simplifiée sur la figure 2, mettant en œuvre plusieurs niveaux de serveurs mis en série, les serveurs de chaque niveau ayant des fonctions complémentaires permettant de mettre en œuvre un service de communication anonymisé. Dans l'exemple illustré, un utilisateur 'U' dispose d'un équipement (202) pour accéder à un service (204) disponible à une adresse 'S'. L'équipement (202) dispose d'au moins deux interfaces réseaux (202-a, 202-b) pour se connecter à un réseau de communication comme internet, via des fournisseurs d'accès à l'Internet (FAI). De manière préférentielle, les interfaces sont connectées via des fournisseurs d'accès indépendants. Dans une variante d'implémentation, le procédé de l'invention peut être opéré sur un dispositif de communication muni de deux interfaces ou plus connectées via un même FAI, ou sur un dispositif de communication muni d'une seule interface connectée via différents FAI.

Un premier groupe de serveurs (206) dits serveurs de premier niveau (Pui), sert de point d'entrée au service d'anonymisation d'un flux montant de l'utilisateur U vers le service, et a pour fonction de masquer les adresses IP de l'utilisateur au reste du système d'anonymisation.

Un second groupe de serveurs (208) dits serveurs de second niveau (Psi), sert de point de sortie pour un flux montant de l'utilisateur vers le service, et a pour fonction de masquer l'adresse 'S' du service à tout ce qui est en amont du système d'anonymisation, en particulier aux fournisseurs d'accès à internet de l'utilisateur. Le second groupe de serveurs permet aussi de faire suivre le flux montant au service via un serveur maître. De manière préférentielle, le serveur maître est choisi dans le groupe des serveurs de second niveau.

Un serveur isolé (210) dit serveur retour ou serveur de flux descendant (PR) sert de point d'entrée pour un flux descendant du service vers l'utilisateur, et a pour fonction de distribuer le flux descendant en provenance de S aux serveurs de second niveau (Psi). Il a aussi pour fonction de synchroniser les serveurs de second niveau lors de leurs échanges TCP avec le service S.

Dans une variante de réalisation, les fonctions de serveur maître et de serveur retour sont hébergées par la même machine.

Le système d'anonymisation comprend de plus plusieurs types de registres :
- un registre (212) d'identifiant de connexion entre l'émetteur et le récepteur R[USx] pour stocker un identifiant temporaire 'USx' qui identifie de manière unique une connexion entre l'équipement utilisateur U et le service S. Dans une implémentation préférentielle, l'identifiant de connexion USx est généré par U pour identifier de manière unique sa connexion avec S, et le registre R[USx] est maintenu par les serveurs de second niveau (Psi).
- un registre (214) dédié aux serveurs de premier niveau R[Pui] qui contient une liste de serveurs (Pui) dans laquelle l'équipement utilisateur U peut sélectionner des serveurs de premier niveau à assigner à chacune de ses interfaces pour établir une communication anonymisée. Dans une implémentation préférentielle, le registre R[Pui] est maintenu par les serveurs de premier niveau.
- un registre (216) dédié aux serveurs de second niveau R[Psi] qui contient une liste de serveurs (Psi) dans laquelle l'équipement utilisateur U peut sélectionner des serveurs de second niveau à assigner à chaque serveur de premier niveau. Dans une implémentation préférentielle, le registre R[Psi] est maintenu par les serveurs de second niveau.
- un registre (218) dédié au serveur retour R[PRi] contient une liste de serveurs (PR) dans laquelle l'équipement utilisateur U peut sélectionner un serveur retour. Dans une implémentation préférentielle, le registre R[PRi] est maintenu par les serveurs retour. Dans un mode de réalisation particulier, le serveur retour PR peut être un serveur sélectionné dans le groupe des serveurs de second niveau.

Dans un mode de réalisation particulier, l'affectation respective des serveurs de premier niveau Puᵢ et de second niveau Psᵢ est faite de manière dynamique afin d'accroître le niveau de confiance dans le système. Avantageusement, le choix des Puᵢ et Psᵢ étant laissé à l'utilisateur du service, celui-ci est en mesure de changer les Pui et Psi même en cours d'échange TCP.

Afin aussi d'accroître la séparation des éléments du triplet (U, S, contenu), l'assignation du serveur maître qui est chargé de la reconstitution des fragments reçus par les serveurs de second niveau et de leur transfert vers S, peut être faite de manière dynamique.

Selon des variantes de réalisation, les groupes de serveurs (Puᵢ), (Psᵢ) et (PR) peuvent chacun être segmentés en plusieurs sous-groupes, permettant de diminuer la probabilité de croisement d'informations via la surveillance d'éléments clés du réseau Internet (tel le « *backbone* » opérateur, les câbles sous-marins...).

Pour les flux montants de U vers S, la mise en œuvre du procédé de l'invention dans l'architecture proxy distribué, s'appuie sur des étapes de :
- transfert par les multiples interfaces de l'utilisateur aux serveurs de second niveau assignés, de l'adresse IP du service S au travers d'un mécanisme de secret partagé, lesdits serveurs de second niveau informant le serveur retour qui reconstitue l'adresse complète de S et la communique aux serveurs de second niveau assignés ;
- transfert par les multiples interfaces de l'utilisateur aux serveurs de premier niveau Pui, puis aux serveurs de second niveau Psi, des différents fragments de données d'un paquet original ;
- réassemblage par le serveur maître de second niveau, des paquets contenants les différents fragments d'un paquet original sous la forme d'un paquet unique ; et
- transfert du paquet reconstitué vers S.

Dans la variante principale, le paquet original à transmettre par U est en premier lieu transformé via un mécanisme de secret partagé en différents fragments. Des paquets contenant ces différents fragments sont transmis depuis U jusqu'aux Psi sélectionnés via les Pui, et un Psi maître reconstitue le paquet original à partir de ces différents fragments et l'envoie à S en se faisant passer pour PR. Ainsi pour l'équipement destinataire S, tout se passe comme s'il recevait le paquet original depuis PR.

Dans une variante de réalisation dite collaborative, les fragments sont émis directement par les Psi sans reconstitution préalable par Psi maître. Le destinataire S est configuré pour recevoir les fragments et les réassembler afin de reconstituer le paquet original émis par l'utilisateur U qui lui est destiné.

Pour les flux descendants de S vers U, la mise en œuvre du procédé de l'invention dans l'architecture proxy distribué s'appuie sur des étapes de :
- envoi d'un paquet original émis par S au serveur retour PR ;
- transfert de fragments du paquet original, obtenus via le mécanisme de secret partagé, de PR aux serveurs de second niveau Psi, puis aux serveurs de premier niveau Pui, puis à U ;
- réassemblage par U du paquet original.

Plusieurs implémentations sont envisageables :
- une gestion des messages ICMP/TCP (accusés de réception, contrôle de la fenêtre...) directement par PR et donc par le service d'anonymisation, obligeant alors à recourir à un *buffer* aux niveaux des (Psi) et PR. Par nature ce buffer augmente l'impact d'une faille potentielle du nœud en question ; ou
- une non-gestion des messages ICMP/TCP qui risque d'aboutir à une baisse de la qualité de service du service d'anonymisation.

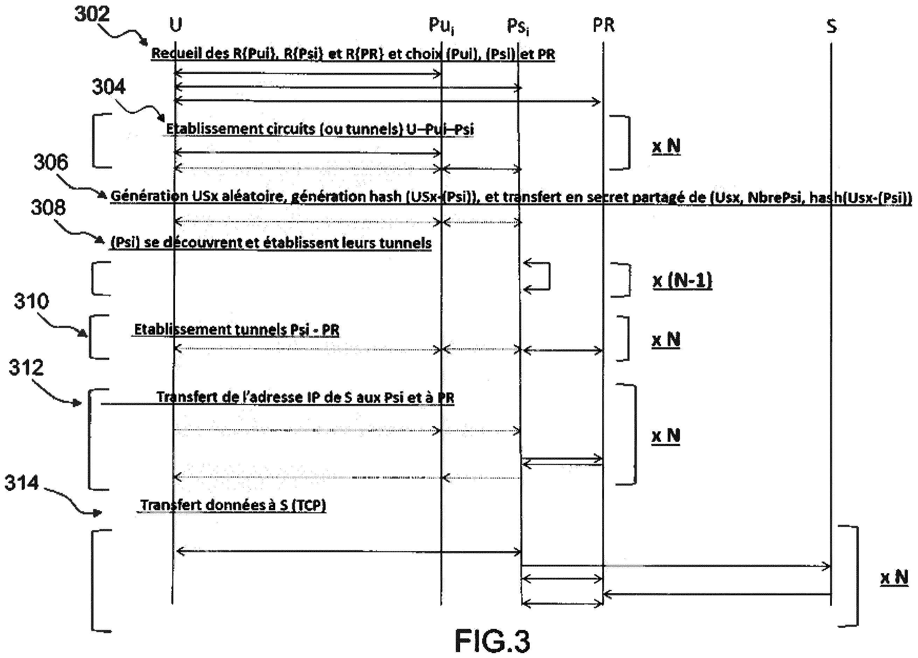

La figure 3 illustre les flux entre les différentes entités (U, Pui, Psi, PR, S) de la figure 2 permettant d'établir une connexion d'anonymisation (300) selon un mode de réalisation de l'invention. Dans une première étape (302), l'émetteur U sélectionne des serveurs Pui, Psi et un serveur retour PR en consultant dans les registres correspondants R[Pui], R[Psi] et R[PR], les serveurs disponibles. Selon des variantes de réalisation, il peut être choisi le même nombre ou un nombre différent de serveurs Pui et Psᵢ. Cependant, pour éviter des croisements d'information trop facile, le nombre de serveurs Psᵢ est de manière préférentielle supérieur au nombre de serveurs Puᵢ.

L'émetteur U dispose via les registres d'une liste de proxies pour les serveurs de premier niveau Pui qu'il est capable d'authentifier et d'une liste de proxies pour les serveurs de second niveau Psi qu'il est capable d'authentifier et avec lesquels il dispose d'un secret partagé (ou d'un autre moyen cryptographique d'échanger des données de manière confidentielle).

L'étape suivante (304) consiste à établir des circuits U-Pui entre U et les serveurs de premier niveau Pui. L'émetteur U envoie au travers de chacune de ses interfaces une demande d'établissement de circuit au(x) Pui choisi(s) afin d'être contacté(s) au travers de cette interface. Chaque circuit U-Pui est identifié par un identifiant unique, choisi aléatoirement ou non, par U. Pour chaque circuit U-Pui établi, l'émetteur U informe le Pui correspondant, du serveur de second niveau Psi qui lui est assigné. Chaque Pui est alors en capacité de faire suivre le trafic entrant en provenance de U vers le Psi qui lui est affecté. Réciproquement, le trafic descendant, est retransmis du destinataire S vers les Psi, puis vers les Pui et vers U.

L'étape suivante (306) consiste à mettre en place un secret partagé avec les serveurs de second niveau. L'émetteur U génère un nombre aléatoire USx, de préférence de taille standardisée, qui va identifier de manière unique et temporaire la connexion. Le procédé permet de vérifier si ce nombre est déjà présent dans le registre d'identifiant de connexion entre l'émetteur et le récepteur R[USx]. Si ce nombre n'est pas dans le registre R[USx], il réserve ce nombre, sinon il génère la procédure une seconde fois. Puis le procédé permet de transférer cet identifiant via un mécanisme de secret partagé afin de le masquer aux serveurs Pui. Pour cela le procédé permet de générer un hashage de la séquence {USx-(Psi)}, qui va permettre à chaque Psi de confirmer par lui-même son appartenance au groupe de serveurs de second niveau assignés, en connaissant son émetteur et son adresse, et en réalisant la fonction de hash, il vérifie s'il obtient le même nombre aléatoire USx que celui communiqué par l'émetteur U via les Pui.

Puis, l'émetteur U communique aux Psi en secret partagé, un paquet de taille fixe {USx-hash(USx-{Psi})} contenant la séquence hachée placée de manière variable dans le paquet. Le paquet contient en entête un indicateur de position de la séquence hachée et le nombre 'N' de Psi sélectionnés. Ce nombre N est nécessaire pour que chaque Psi sache le nombre de Psi avec lesquels il doit collaborer dans le cadre de la connexion USx.

L'étape suivante (308) consiste à établir, pour la connexion USx, des tunnels U-Psi entre l'émetteur U et les serveurs de second niveau Psi. A réception d'un paquet émis par U, chaque Psi enclenche le mécanisme d'auto-découverte suivant en envoyant la séquence hachée {USx-hash(USx-(Psi))} contenue dans le paquet, au groupe des Psi sélectionnés. Lorsque deux Psi sont utilisés, par exemple : Ps1 et Ps2, U envoie la séquence hash({USx-hash({USx-IP_Ps1-IP_Ps2})})). Pour chaque séquence hachée {USx-hash(USx-(Psi))} reçue par un Psj, le Psj calcule le hash({USx-Psi-Psj}) et vérifie s'il correspond bien au hash transmis dans la séquence hachée. Si les deux hash correspondent, Psj a une garantie que le Psi est bien celui avec lequel il va devoir coopérer pour l'USx en question. Lorsque plus de deux Psi sont utilisés, ce mécanisme est mis en place de manière itérative sur tous les Psi avec un ordre de priorité alloué aux (Psi) ainsi que l'indication du nombre 'N' de (Psi) à considérer dans le mécanisme d'auto-découverte.

L'étape suivante (310) consiste à établir des tunnels Psi-PR entre les serveurs de second niveau Psi et le serveur retour PR. Ceci se fait en communicant par secret partagé l'adresse PR aux Psi. Pour un maximum de confidentialité, cela peut être fait dès l'étape de découverte des Psi en intégrant, après le hashage {USx-hash(USx-(Psi))} l'adresse IP de PR en secret partagé. La validation par PR des différents Psi affectés à l'USx donné peut se faire selon un mécanisme de validation similaire à celui utilisé dans l'étape de découverte des Psi. Une fois les tunnels établis, PR attend les alertes des Psi sur l'envoi de données.

L'étape suivante (312) consiste à communiquer l'adresse de S aux serveurs de second niveau Psi et au serveur retour PR. U transfère aux Psi via le secret partagé l'adresse de S qui en informent PR. Le serveur retour reconstitue l'adresse IP complète de S, puis la communique en retour aux Psi. Les Psi informent U qu'ils sont prêts.

Dans l'étape suivante (314), U peut communiquer des données vers S en utilisant le service d'anonymisation. A l'issue des échanges, U se déconnecte séquentiellement de PR, des Psi, libère le nombre aléatoire temporaire USx du registre R[PR], et se déconnecte des Pui.

L'homme du métier peut implémenter des variantes du procédé (300) de mise en place du service d'anonymisation. Ainsi, les circuits U-Psi peuvent être cryptés et donc être des tunnels en ayant Pui comme pont.

Dans d'autres modes d'implémentations :
- les (Pui), (Psi) et PR peuvent être choisis de manière dynamique : l'émetteur U pilotant le choix de ces serveurs, il peut choisir de réinitialiser les différents (Pui), (Psi) et PR à sa demande. Une fréquence élevée de réinitialisation permet d'accroître le degré d'anonymisation, mais au détriment de la performance (augmentation de la latence) ;
- le nombre de connexions supportées entre U et PR ou les modes de transmission des paquets de données entre U et PR peuvent être ajustés afin d'obtenir le meilleur compromis voulu entre privacy, « overhead » général et temps de réponse ;
- les (Pui), (Psi) et (PR) sélectionnés pour un service d'anonymisation peuvent être conservés pour des connections avec d'autres services vers S afin de gagner en performance ;
- des modifications de certains éléments peuvent être appliquées afin d'accroître la sécurité tout en conservant un niveau de performance plus élevé, tel que du cryptage additionnel, des mécanismes de validation des connexions Psi par PR par exemple.

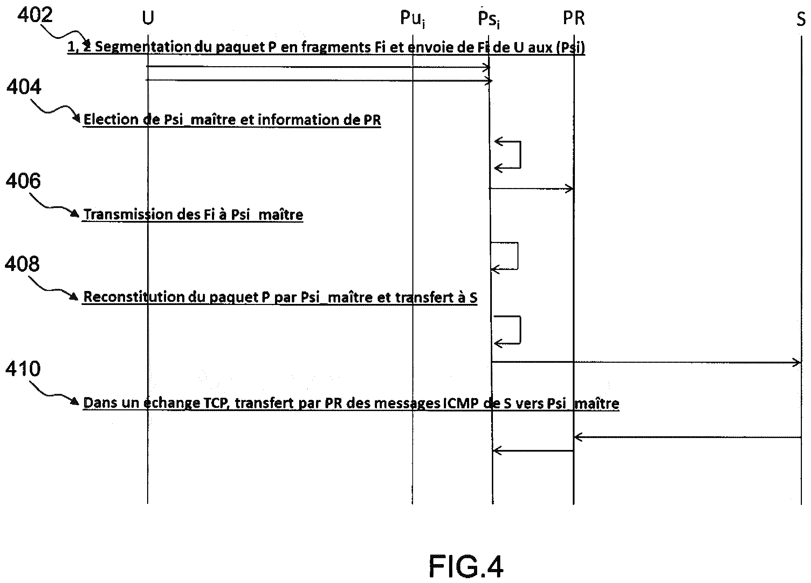

La figure 4 est un diagramme de flux d'un mode de réalisation de l'invention pour illustrer les échanges (400) lors de la transmission d'un paquet P de données en flux montant de U vers S. Le procédé (400) qui renforce la confidentialité des données en flux montant s'appuie sur la mise en place du contexte d'anonymisation selon le procédé décrit en référence à la figure 3.

Une première étape (402) consiste à segmenter le paquet P à envoyer à S en une pluralité de fragments Fi correspondant au nombre de Pui. U applique un mécanisme de secret partagé au paquet P à envoyer et transmet dans les circuits U-Pui un fragment Fi au serveur de premier niveau Pui correspondant via l'interface choisie pour ce Pui. A réception du fragment Fi, le Pui transmet ce fragment Fi au Psi assigné lors de la négociation (étape 304) en suivant le circuit U_Pui_Psi qui a été établi.

Dans une étape suivante (404), un serveur maître Psi_maître est sélectionné. Pour une plus grande confidentialité des échanges, le Psi élu reste maître pour une durée prédéfinie soit par U, soit de manière aléatoire. Le Psi_maître est chargé de coordonner les Psi avec PR et il informe ce dernier en conséquence.

Dans une étape suivante (406), tous les Psi transmettent leur fragment Fi au Psi_maître.

Dans une étape suivante (408), le Psi_maître reconstitue le paquet P, et le transfère à S. Le serveur Psi_maître se fait passer pour le serveur retour PR, en inscrivant l'adresse PR comme adresse émettrice dans l'entête du paquet P.

Dans le cas d'une transmission TCP, lors de l'étape (404), le Psi_maître informe (405) le serveur retour PR de son rôle de maître. Puis après l'étape 408, S peut alors envoyer (410) des messages ICMP (gestion de la fenêtre et des accusés de réception) vers PR qui devra les faire suivre vers le Psi_maître.

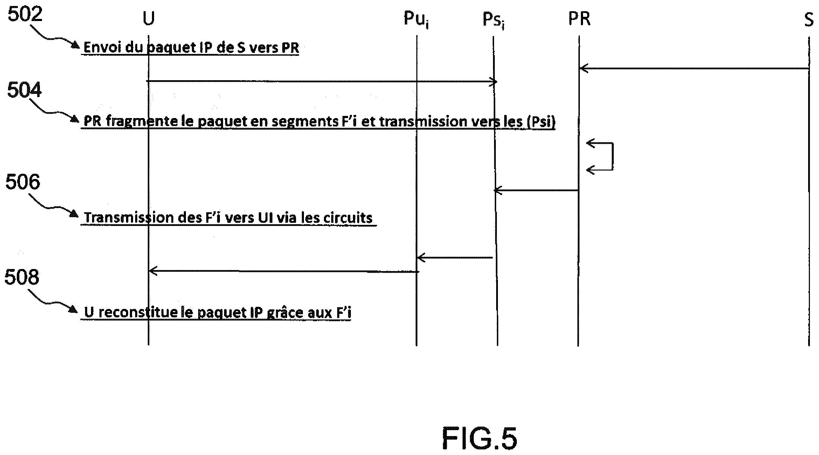

La figure 5 est un diagramme de flux d'un mode de réalisation de l'invention pour illustrer les échanges (500) lors de la transmission d'un paquet P en flux descendant de S vers U. Le procédé (500) qui renforce la confidentialité des données en flux descendant s'appuie sur la mise en place du contexte d'anonymisation décrit en référence à la figure 3.

Dans une première étape (502), le paquet P est envoyé de S à PR, puisque PR apparait pour S comme étant le serveur en communication avec lui, l'adresse de PR étant inscrite dans le champ « adresse émetteur » du paquet P reçu par S.

A réception du paquet, le serveur PR lui applique un mécanisme de secret partagé qui peut ou non être le même que pour le flux montant, et transmet (504) les fragments F'ᵢ générés aux Psi qui sont relatifs à la communication en cours et définis lors de la mise en place du service d'anonymisation (procédé 300).

A réception d'un fragment, chaque Psi transmet (506) le fragment F'ᵢ reçu vers U via le circuit U-Pui-Psi établi lors de la mise en place du service d'anonymisation (300).

A réception de l'ensemble des fragments, U reconstitue (508) le paquet P envoyé par PR.

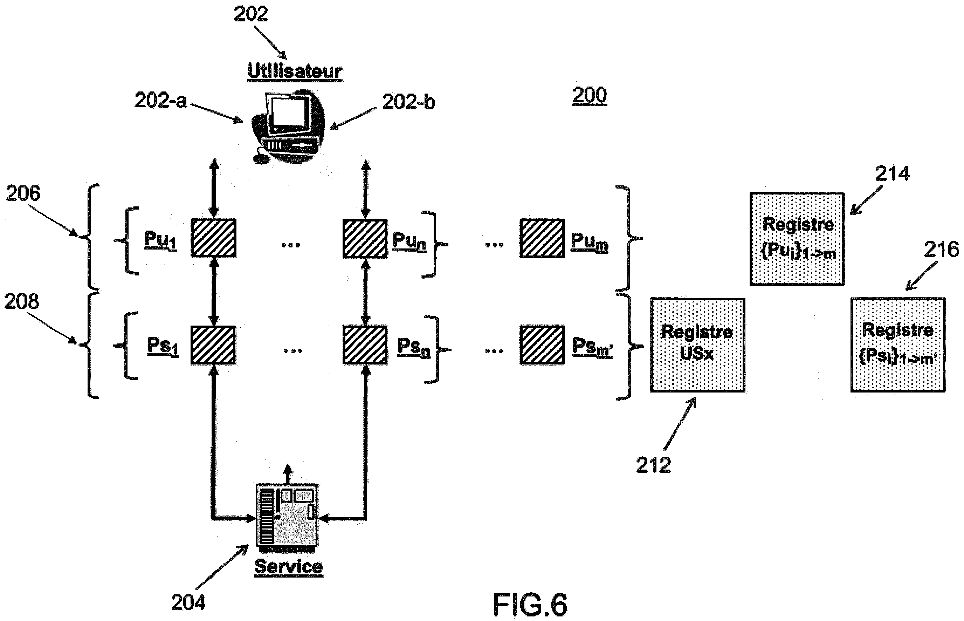

La figure 6 illustre une variante de l'architecture proxy distribué des serveurs de la figure 2, permettant de mettre en œuvre l'invention dans un mode collaboratif ou coopératif ayant une implémentation du protocole sur un client et un serveur. Dans le mode collaboratif, le serveur de retour PR devient inutile, et il n'y a pas de registre R[PRi]. Le mode collaboratif permet deux modes de réalisation selon que S a rendu public l'adresse IP que d'une seule de ses interfaces, ou selon que S a rendu public l'adresse IP de toutes ses différentes interfaces (Si). Les flux montants et descendants pour ces deux variantes collaboratives sont relativement simples puisque ne requérant pas de PR, U transfert à S ses fragments par secret partagé via les différentes interfaces (Ui), fragments qui sont respectivement réceptionnés par les interfaces (Si) de S, permettant à S de reconstituer les paquets.

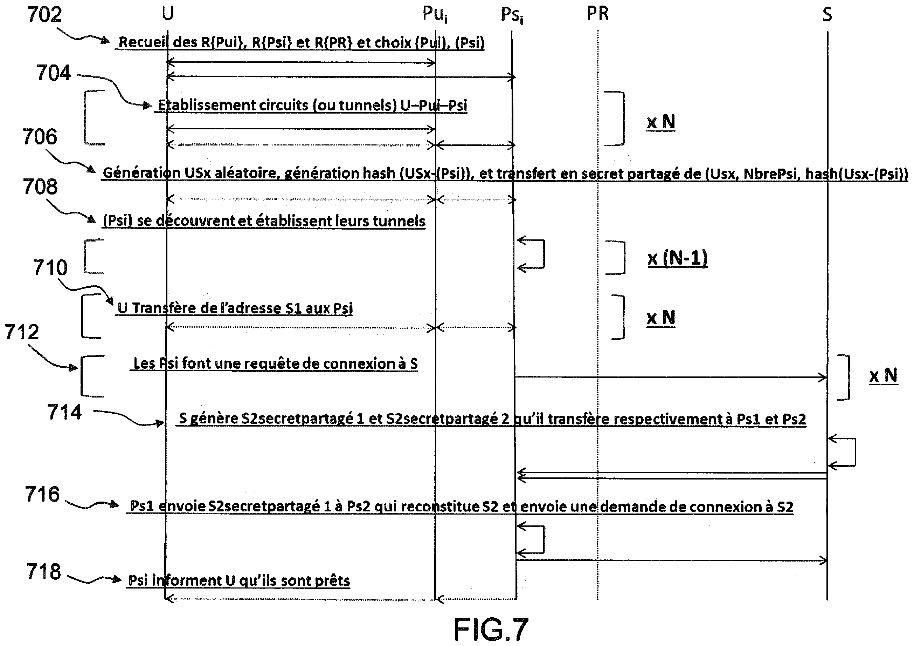

La figure 7 est un diagramme de flux pour illustrer l'établissement d'une connexion d'anonymisation en mode collaboratif dans le cas où S a rendu public, par exemple au travers du service DNS, l'adresse IP que d'une seule de ses interfaces (S1 par exemple parmi deux interfaces S1 et S2). D'une manière générale, une fois la communication de l'adresse de S1 aux (Psi) effectuée, une demande de connexion collaborative est émise. Afin que S puisse communiquer l'adresse de son autre interface S2 de manière non publique, la demande de connexion collaborative est initiée par les serveurs de second niveau sélectionnés (par exemple PS1 et PS2), qui reçoivent en retour un accusé de réception de S confirmant l'accord de connexion en mode collaboratif, ainsi que l'adresse IP de l'interface S2.

Par rapport à la variante en mode non collaboratif illustrée par la figure 3, les étapes 702 à 708 sont identiques aux étapes 302 à 308 et ne sont pas décrites de nouveau. Il est à noter que lors de l'étape 302 de sélection des serveurs de premier et second niveaux, il n'y a pas de sélection de serveur retour PR dans le mode de réalisation de la figure 7. Par ailleurs, le serveur retour PR étant inutile pour cette variante, l'étape 310 d'établissement des tunnels Psi-PR n'existe pas.

Le procédé de la figure 7 continue après l'étape 708, par une étape (710) où U transfère aux serveurs de second niveau sélectionnés l'adresse publique via un secret partagé. A l'étape suivante (712), les Psi envoient à S une demande de connexion à l'interface publique S1.

Dans une étape suivante (714), S génère deux nombres aléatoires 'S2secretpartagé1' et 'S2secretpartagé2', tels qu'une fois recombinés ils constituent l'adresse de l'interface non publique S2. S transfère un nombre respectivement à chaque serveur de second niveau PS1 et PS2. Puis (étape 716) S envoie via l'interface publique S1, un accusé de réception comprenant l'accord de connexion à Ps1 avec le secret partagé 'S2secretpartagé1', et envoie via l'interface non publique S2, un accusé de réception à Ps2 comprenant l'accord de connexion à Ps2 avec le secret partagé 'S2secretpartagé'.

Dans une étape suivante (716), Ps1 envoie son nombre 'S2secretpartagé1' à Ps2 qui est alors en mesure avec son nombre 'S2secretpartagé2', de recalculer l'adresse non publique S2 et peut ainsi lui envoyer une demande de connexion.

A l'étape suivante (718), les serveurs de second niveau Psi informent U qu'ils sont prêts pour une communication anonymisée. U peut alors communiquer vers S en utilisant le service d'anonymisation.

Il est à noter qu'à l'issue des échanges, U se déconnecte séquentiellement des Psi, libère le nombre aléatoire temporaire USx du registre R[PR], et se déconnecte de Pui.

Le procédé de la figure 7 qui n'est pas à considérer de manière limitative, a été décrit pour un service S comportant deux interfaces. Si S dispose de plus de 2 interfaces, les étapes 714 et 716 sont réalisées pour générer autant de nombres de secrets partagés que d'interfaces et transférer les adresses des interfaces additionnelles aux Psi.

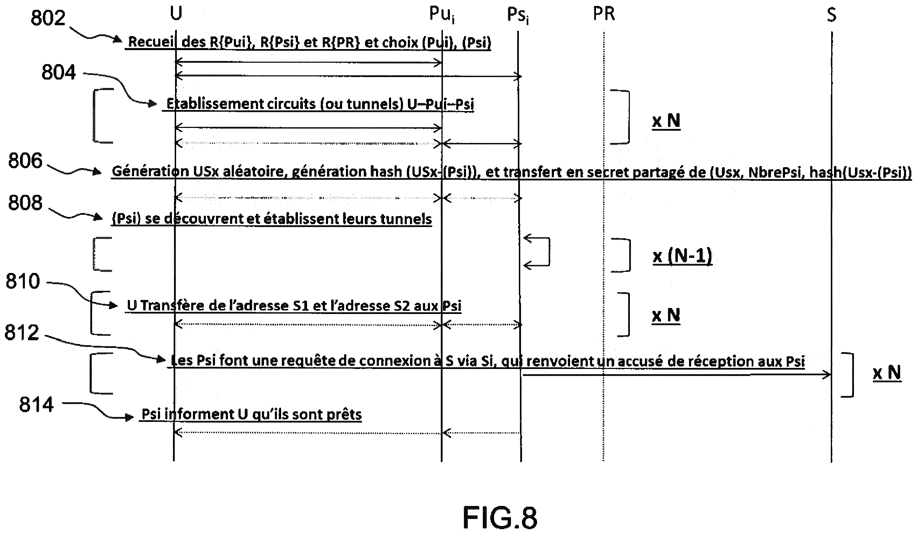

La figure 8 est un diagramme de flux pour illustrer l'établissement d'une connexion d'anonymisation en mode coopératif dans le cas où S a rendu public les adresses IP de toutes ses différentes interfaces (par exemple S1 et S2 pour le cas illustré), par exemple au travers d'un service évolué de type DNS prenant en compte la capacité des services à avoir plusieurs interfaces.

Par rapport à la variante en mode non collaboratif illustrée par la figure 3, les étapes 802 à 808 sont identiques aux étapes 302 à 308 et ne sont pas décrites de nouveau. Il est à noter que lors de l'étape 302 de sélection des serveurs de premier et second niveaux (Pui, Psi), il n'y a pas de sélection de serveur retour PR dans le mode de réalisation de la figure 8. Par ailleurs, le serveur retour PR étant inutile pour cette variante, l'étape 310 d'établissement des tunnels Psi-PR n'existe pas.

Le procédé de la figure 8 continue après l'étape 708, par une étape (810) où U transfère aux serveurs de second niveau sélectionnés (Psi) les adresses publiques S1 et S2 via un secret partagé. Dans une étape suivante (812), chaque Psi envoie respectivement une demande de connexion aux interfaces S1 et S2 de S, qui en retour envoie un accusé de réception aux Psi.

A l'étape suivante (814), les Psi informent U qu'ils sont prêts. U peut alors communiquer vers S en utilisant le service d'anonymisation.

Il est à noter qu'à l'issue des échanges, U se déconnecte séquentiellement des Psi, libère le nombre aléatoire temporaire USx du registre R[PR], et se déconnecte de Pui.

Le procédé de la figure 8 qui n'est pas à considérer de manière limitative, a été décrit pour un service S comportant deux interfaces. Si S dispose de plus de 2 interfaces, les étapes 810 et 812 sont réalisées pour autant d'adresses IP que d'interfaces du service S.

L'invention peut s'implémenter à partir d'éléments matériel et/ou logiciel. Elle peut être disponible en tant que produit programme d'ordinateur sur un support lisible par ordinateur. Le support peut être électronique, magnétique, optique, électromagnétique ou être de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

1. Un procédé d'anonymisation pour communiquer des données dans un réseau de communication IP, d'un émetteur ayant une pluralité d'interfaces réseau à un récepteur disposant d'au moins une adresse IP, le procédé comprenant les étapes de :
- transmettre par la pluralité d'interfaces réseau, des fragments de l'adresse IP du récepteur à une pluralité de serveurs dits serveurs de second niveau, selon un premier mécanisme de secret partagé ;
- transmettre par chaque serveur de second niveau le fragment d'adresse IP reçu à un unique serveur dit serveur maître, ledit serveur maître étant apte à reconstituer l'adresse IP du récepteur ;
- transmettre par la pluralité d'interfaces réseau, des fragments de données d'un paquet de données, à une pluralité de serveurs dits serveurs de premier niveau, selon un second mécanisme de secret partagé ;
- transmettre par chaque serveur de premier niveau le fragment de données reçu à un serveur de second niveau parmi la pluralité des serveurs de second niveau;
- transmettre par chaque serveur de second niveau, le fragment de données reçu au serveur maître, le serveur maître étant apte à reconstituer le paquet de données à partir de tous les fragments de données reçus; et
- transmettre depuis le serveur maître le paquet de données au récepteur.

2. Le procédé selon la revendication 1 dans lequel l'étape de transmettre par la pluralité d'interfaces réseau, des fragments de données à la pluralité de serveurs de premier niveau, consiste à :
- transformer le paquet de données à transmettre en autant de fragments de données que d'interfaces réseaux, ladite transformation du paquet se faisant selon le second mécanisme de secret partagé ; et
- transmettre chaque fragment de données à un serveur de premier niveau via une interface réseau différente, chaque serveur de premier niveau étant assigné à une interface réseau.

3. Le procédé selon la revendication 2 comprenant avant l'étape de transformation d'un paquet de données, une étape permettant à l'émetteur de sélectionner et d'authentifier autant de serveurs de premier niveau que d'interfaces réseaux parmi la pluralité de serveurs de premier niveau, et d'établir un circuit de communication unique entre chaque interface réseau et un serveur de premier niveau sélectionné.

4. Le procédé selon la revendication 3 comprenant de plus une étape permettant à l'émetteur de sélectionner au moins autant de serveurs de second niveau que de serveurs de premier niveau sélectionnés, et d'assigner un serveur de second niveau sélectionné à chaque serveur de premier niveau sélectionné, et une étape permettant d'informer chaque serveur de premier niveau, du serveur de second niveau qui lui est assigné.

5. Le procédé selon l'une quelconque des revendications 1 à 4 dans lequel l'étape de transmettre par chaque serveur de premier niveau le fragment de données reçu à un serveur de second niveau consiste à transmettre un fragment de données depuis un serveur de premier niveau à un serveur de second niveau qui lui est assigné, ledit serveur de second niveau ayant reçu de l'émetteur un fragment de l'adresse IP du récepteur selon le premier mécanisme de secret partagé.

6. Le procédé selon l'une quelconque des revendications 1 à 5 dans lequel l'étape de transmettre à une pluralité de serveurs de second niveau, des fragments de l'adresse IP du récepteur, comprend une étape permettant à l'émetteur d'établir un tunnel de communication entre chaque interface réseau et un serveur de second niveau.

7. Le procédé selon l'une quelconque des revendications 1 à 6 comprenant une étape permettant une auto-découverte des serveurs de second niveau et permettant d'établir des tunnels de communication entre les serveurs de second niveau et le serveur maître selon le premier mécanisme de secret partagé.

8. Le procédé selon l'une quelconque des revendications 1 à 7 comprenant une étape permettant de sélectionner un serveur maître parmi les serveurs de second niveau.

9. Le procédé selon l'une quelconque des revendications 1 à 8 dans lequel l'étape de transmettre par chaque serveur de second niveau le fragment d'adresse IP reçu à un unique serveur, consiste à transmettre lesdits fragments à un unique serveur dit serveur retour, ledit serveur retour étant apte à reconstituer l'adresse IP du récepteur et à synchroniser les serveurs de second niveau lors d'échanges TCP avec le récepteur.

10. Le procédé selon la revendication 9 comprenant de plus des étapes consistant à :
- envoyer de manière anonyme un paquet de données du récepteur au serveur retour ;
- transmettre du serveur retour aux serveurs de second niveau sélectionnés, des fragments de données générés via un troisième mécanisme de secret partagé ;
- transmettre par chaque serveur de second niveau, le fragment de données reçu, au serveur de premier niveau qui lui est assigné;
- transmettre par chaque serveur de premier niveau, le fragment de données reçu, à l'émetteur ; et
- reconstituer par l'émetteur, le paquet de données à partir de tous les fragments de données reçus.

11. Le procédé selon la revendication 10 dans lequel le deuxième et le troisième mécanisme de secret partagé sont les mêmes.

12. Un produit programme d'ordinateur, ledit programme d'ordinateur comprenant des instructions de code permettant d'effectuer les étapes du procédé selon l'une quelconque des revendications 1 à 11, lorsque ledit programme est exécuté sur un ordinateur.

13. Un dispositif d'anonymisation, pour communiquer des données dans un réseau de communication IP, d'un émetteur ayant une pluralité d'interfaces réseau à un récepteur disposant d'au moins une adresse IP, le dispositif comprenant des moyens pour mettre en œuvre les étapes du procédé selon l'une quelconque des revendications 1 à 11.

## Patentansprüche

1. Anonymisierungsverfahren zum Kommunizieren von Daten in einem IP-Kommunikationsnetzwerk, von einem Sender, welcher eine Vielzahl von Netzwerkschnittstellen aufweist, an einen Empfänger, welcher über mindestens eine IP-Adresse verfügt, wobei das Verfahren folgende Schritte umfasst:
- Übertragen, über die Vielzahl von Netzwerkschnittstellen, von Fragmenten der IP-Adresse des Empfängers an eine Vielzahl von Servern, genannt Server zweiter Stufe, gemäß einem ersten gemeinsamen Geheimmechanismus;
- Übertragen, durch jeden Server zweiter Stufe, des empfangenen Fragments der IP-Adresse an einen einzigen Master-Server genannten Server, wobei der Master-Server in der Lage ist, die IP-Adresse des Empfängers zu rekonstituieren;
- Übertragen, über die Vielzahl von Netzwerkschnittstellen, von Datenfragmenten eines Datenpaketes, an eine Vielzahl von Servern, genannt Server erster Stufe, gemäß einem zweiten gemeinsamen Geheimmechanismus;
- Übertragen, durch jeden Server erster Stufe, des empfangenen Datenfragments an einen Server zweiter Stufe unter der Vielzahl von Servern zweiter Stufe;
- Übertragen, durch jeden Server zweiter Stufe, des empfangenen Datenfragments an einen Master-Server, wobei der Master-Server in der Lage ist, das Datenpaket anhand aller empfangenen Datenfragmente zu rekonstituieren; und
- Übertragen, von dem Master-Server, des Datenpakets an den Empfänger.

2. Verfahren nach Anspruch 1, wobei der Schritt des Übertragens, durch die Vielzahl von Netzwerkschnittstellen, von Datenfragmenten an die Vielzahl von Servern erster Stufe in folgenden Schritten besteht:
- Verwandeln des zu übertragenden Datenpakets in ebenso viele Datenfragmente wie Netzwerkschnittstellen, wobei die Verwandlung des Pakets gemäß dem zweiten gemeinsamen Geheimmechanismus erfolgt; und
- Übertragen eines jeden Datenfragments an einen Server erster Stufe über eine unterschiedliche Netzwerkschnittstelle, wobei jeder Server erster Stufe einer Netzwerkschnittstelle zugewiesen ist.

3. Verfahren nach Anspruch 2, umfassend, vor dem Schritt des Verwandeins eines Datenpakets, einen Schritt, welcher es dem Sender ermöglicht, ebenso viele Server erster Stufe wie Netzwerkschnittstellen unter der Vielzahl von Servern erster Stufe auszuwählen und zu authentifizieren, und einen einzigen Kommunikationskreis zwischen jeder Netzwerkschnittstelle und einem ausgewählten Server erster Stufe herzustellen.

4. Verfahren nach Anspruch 3, ferner umfassend einen Schritt, welcher es dem Sender ermöglicht, mindestens ebenso viele Server zweiter Stufe wie ausgewählte Server erster Stufe auszuwählen, und jedem ausgewählten Server erster Stufe einen ausgewählten Server zweiter Stufe zuzuweisen, und einen Schritt, welcher es ermöglicht, jeden Server erster Stufe über den ihm zugewiesenen Server zweiter Stufe zu informieren.

5. Verfahren nach einem der Ansprüche 1 bis 4, wobei der Schritt des Übertragens des empfangenen Datenfragments durch jeden Server erster Stufe an einen Server zweiter Stufe darin besteht, ein Datenfragment von einem Server erster Stufe an einen Server zweiter Stufe, welcher ihm zugewiesen ist, zu übertragen, wobei der Server zweiter Stufe vom Sender ein Fragment der IP-Adresse des Empfängers gemäß dem ersten gemeinsamen Geheimmechanismus empfangen hat.

6. Verfahren nach einem der Ansprüche 1 bis 5, wobei der Schritt des Übertragens von Fragmenten der IP-Adresse des Empfängers an eine Vielzahl von Servern zweiter Stufe einen Schritt umfasst, welcher es dem Sender ermöglicht, einen Kommunikationstunnel zwischen jeder Netzwerkschnittstelle und einem Server zweiter Stufe herzustellen.

7. Verfahren nach einem der Ansprüche 1 bis 6, umfassend einen Schritt, welcher eine Selbstentdeckung der Server zweiter Stufe ermöglicht, und es ermöglicht, Kommunikationstunnel zwischen den Servern zweiter Stufe und dem Master-Server gemäß dem ersten gemeinsamen Geheimmechanismus herzustellen.

8. Verfahren nach einem der Ansprüche 1 bis 7, umfassend einen Schritt, welcher es ermöglicht, einen Master-Server unter den Servern zweiter Stufe auszuwählen.

9. Verfahren nach einem der Ansprüche 1 bis 8, wobei der Schritt des Übertragens des empfangenen IP-Adressenfragments durch jeden Server zweiter Stufe an einen einzigen Server darin besteht, die Fragmente an einen einzigen Server zu übertragen, genannt Retour-Server, wobei der Retour-Server in der Lage ist, die IP-Adresse des Empfängers zu rekonstituieren und die Server zweiter Stufe bei TCP-Austauschen mit dem Empfänger zu synchronisieren.

10. Verfahren nach Anspruch 9, ferner Schritte umfassend, welche darin bestehen:
- anonym ein Datenpaket vom Empfänger an den Retour-Server zu senden;
- vom Retour-Server an die ausgewählten Server zweiter Stufe über einen dritten gemeinsamen Geheimmechanismus erzeugte Datenfragmente zu übertragen;
- durch jeden Server zweiter Stufe das empfangene Datenfragment an den ihm zugewiesenen Server erster Stufe zu übertragen;
- durch jeden Server erster Stufe das empfangene Datenfragment an den Sender zu übertragen; und
- durch den Sender, das Datenpaket anhand aller empfangenen Datenfragmente zu rekonstituieren.

11. Verfahren nach Anspruch 10, wobei der zweite und der dritte gemeinsamen Geheimmechanismus dieselben sind.

12. Computerprogrammprodukt, wobei das Computerprogramm Code-Anweisungen umfasst, welche es ermöglichen, die Schritte des Verfahrens nach einem der Ansprüche 1 bis 11 durchzuführen, wenn das Programm auf einem Computer ausgeführt wird.

13. Anonymisierungsvorrichtung zum Kommunizieren von Daten in einem IP-Kommunikationsnetzwerk, von einem Sender, welcher eine Vielzahl von Netzwerkschnittstellen aufweist, an einen Empfänger, welcher über mindestens eine IP-Adresse verfügt, wobei die Vorrichtung Mittel zur Umsetzung der Schritte des Verfahrens nach einem der Ansprüche 1 bis 11 umfasst.

## Claims

1. An anonymization method for communicating data in an IP communication network, from a sender having a plurality of network interfaces to a receiver possessing at least one IP address, the method comprising the steps of:
- transmitting, by the plurality of network interfaces, fragments of the IP address of the receiver to a plurality of servers, called second-level servers, according to a first shared secret mechanism;
- transmitting, by each second-level server, the received IP address fragment to a single server called master server, said master server being able to reconstruct the IP address of the receiver;
- transmitting, by the plurality of network interfaces, data fragments of a data packet, to a plurality of servers called first-level servers, according to a second shared secret mechanism;
- transmitting, by each first-level server, the received data fragment to a second-level server from among the plurality of second-level servers;
- transmitting, by each second-level server, the received data fragment to the master server, the master server being able to reconstruct the data packet from all the received data fragments; and
- transmitting, from the master server, the data packet to the receiver.

2. The method according to claim 1, wherein the step of transmitting, by the plurality of network interfaces, data fragments to the plurality of first-level servers, consists in:
- transforming the data packet to be transmitted into as many data fragments as there are network interfaces, said transformation of the packet being done according to the second shared secret mechanism; and
- transmitting each data fragment to a first-level server via a different network interface, each first-level server being assigned to a network interface.

3. The method according to claim 2, comprising, before the step of transformation of a data packet, a step allowing the sender to select and authenticate as many first-level servers as there are network interfaces from among the plurality of first-level servers, and to set up a single communication circuit between each network interface and a selected first-level server.

4. The method according to claim 3, also comprising a step allowing the sender to select at least as many second-level servers as there are selected first-level servers, and to assign a selected second-level server to each selected first-level server, and a step making it possible to inform each first-level server of the second-level server which is assigned to it.

5. The method according to any one of claims 1 to 4, wherein the step of transmitting, by each first-level server, the received data fragment to a second-level server consists in transmitting a data fragment from a first-level server to a second-level server which is assigned to it, said second-level server having received from the sender a fragment of the IP address of the receiver according to the first shared secret mechanism.

6. The method according to any one of claims 1 to 5, wherein the step of transmitting, to a plurality of second-level servers, fragments of the IP address of the receiver, comprises a step allowing the sender to set up a communication tunnel between each network interface and a second-level server.

7. The method according to any one of claims 1 to 6, comprising a step allowing for a self-discovery of the second-level servers and making it possible to set up communication tunnels between the second-level servers and the master server according to the first shared secret mechanism.

8. The method according to any one of claims 1 to 7, comprising a step making it possible to select a master server from among the second-level servers.

9. The method according to any one of claims 1 to 8, wherein the step of transmitting, by each second-level server, the received IP address fragment to a single server, consists in transmitting said fragments to a single server called return server, said return server being able to reconstruct the IP address of the receiver and to synchronize the second-level servers in TCP exchanges with the receiver.

10. The method according to claim 9, further comprising steps consisting in:
- anonymously sending a data packet from the receiver to the return server;
- transmitting, from the return server to the selected second-level servers, data fragments generated via a third shared secret mechanism;
- transmitting, by each second-level server, the received data fragment to the first-level server which is assigned to it;
- transmitting, by each first-level server, the received data fragment to the sender; and
- reconstructing, by the sender, the data packet from all the received data fragments.

11. The method according to claim 10, wherein the second and third shared secret mechanisms are the same.

12. A computer program product, said computer program comprising code instructions making it possible to perform the steps of the method according to any one of claims 1 to 11, when said program is run on a computer.

13. An anonymization device, for communicating data in an IP communication network, from a sender having a plurality of network interfaces to a receiver possessing at least one IP address, the device comprising means for implementing the steps of the method according to any one of claims 1 to 11.
